**Europäisches Patentamt**

**European Patent Office**

**Office européen des brevets**

(19)

(11) Veröffentlichungsnummer : **0 082 274**
**B1**

(12)                    **EUROPÄISCHE PATENTSCHRIFT**

(45) Veröffentlichungstag der Patentschrift :
16.04.86

(51) Int. Cl.⁴ : **B 23 K   7/04**

(21) Anmeldenummer : **82109921.5**

(22) Anmeldetag : **27.10.82**

(54) **Verfahren und Vorrichtung zum Bearbeiten eines Rohres mit einem automatisch gesteuerten Brenner.**

(30) Priorität : **23.12.81 DE 3150971**
**16.03.82 DE 3209439**

(43) Veröffentlichungstag der Anmeldung :
**29.06.83 Patentblatt 83/26**

(45) Bekanntmachung des Hinweises auf die Patenterteilung : **16.04.86 Patentblatt 86/16**

(84) Benannte Vertragsstaaten :
**BE FR GB IT NL SE**

(56) Entgegenhaltungen :
**EP-A- 0 036 571**
**AT-B-   143 509**
**DE-A- 2 715 465**
**DE-C-   946 028**

(73) Patentinhaber : **KLÖCKNER-WERKE AKTIENGESELL-**
**SCHAFT**
**Klöcknerstrasse 29**
**D-4100 Duisburg 1 (DE)**

(72) Erfinder : **Noil, Hans**
**Am Werth 16**
**D-5090 Leverkusen (DE)**
Erfinder : **Bangert, Wilfried**
**Im Kirchfeld 24**
**D-5090 Leverkusen 3 (DE)**
Erfinder : **Jacobs, Hans**
**In der Wüste 10**
**D-5090 Leverkusen (DE)**

(74) Vertreter : **Bauer, Wulf, Dr.**
**Klöckner-Werke AG Patentabteilung Klöcknerstrasse**
**29**
**D-4100 Duisburg 1 (DE)**

## Beschreibung

Die Erfindung bezieht sich auf ein Verfahren zum Brennschneiden eines Rohres mit einem automatisch gesteuerten Brenner, der parallel und senkrecht zur Längsachse des Rohres verfahren, um eine senkrecht zur Längsachse des Rohres verlaufenden Achse geschwenkt und um eine parallel zur Längsachse des Rohres verlaufende Achse gekippt wird.

Ein Verfahren zum Schneiden eines Rohres mittels einer automatisch gesteuerten Rohrbrennschneidmaschine ist aus der EU-OS-36 571 bekannt. Dieses Verfahren arbeitet nach dem Prinzip eines Zirkels. Der sogenannte Träger dreht sich um eine Welle. An dem Träger ist ein Schlitten verschiebbar, und an dem Schlitten wiederum ist der Brenner kippbar befestigt. Die Steuerung des Brenners erfolgt mit einer Kurvenscheibe. Dabei kommt es darauf an, daß der Winkel zwischen der Achse B des Brenners und der Achse A der Welle stets dem Winkel β entspricht und daß der Abstand a der Brennerspitze vom Werkstück konstant ist.

Bei diesem bekannten Verfahren treten jedoch dann Probleme auf, wenn eine in ihren Abmessungen recht große Öffnung in ein Rohr geschnitten werden soll, insbesondere, wenn dabei der Winkel zwischen der Brennerachse und der Verschieberichtung des Schlittens klein ist.

Der Erfindung liegt die Aufgabe zugrunde, das aus der EP-OS-36 571 bekannte Verfahren dahingehend zu verbessern, daß eine wesentlich verbesserte Präzision der Linienführung der Spitze des Brenners und damit eine wesentliche Verbesserung der Schnittgeometrie erzielt wird.

Diese Aufgabe wird dadurch gelöst, daß das Rohr beim Schneidvorgang um seine Längsachse gedreht wird und die Bewegungsmöglichkeiten des Brenners so gesteuert werden, daß der in der Innenwandung des Rohres befindliche Schneidpunkt des Brenners auf der Verlängerung der Schwenkachse des Brennerarmes liegt.

Die Erfindung bezieht sich außerdem auf eine Vorrichtung zum Brennschneiden eines Rohres mit einem automatisch gesteuerten Brenner, wobei die Vorrichtung ein Traggerüst und einen Brennerarm aufweist und das Traggerüst mit einem höhenverstellbaren Tragarm versehen ist, an welchem der Brennerarm befestigt ist, und zwar derart, daß der Brennerarm um eine senkrecht zur Rohrlängsachse parallele Achse verschwenkbar ist, wobei der Brennerarm eine Längsführung aufweist, an der ein Schlitten verfahrbar ist, welcher eine parallel zur Längsachse des Rohres verlaufende Kippachse für den Brenner aufweist.

Der Erfindung liegt die Aufgabe zugrunde, eine Vorrichtung auzugeben, die gegenüber der aus der EP-OS-36 571 bekannten Vorrichtung eine wesentlich verbesserte Präzision der Linienführung der Spitze des Brenners und damit eine wesentliche Verbesserung der Schnittgeometrie erzielt.

Diese Aufgabe wird dadurch gelöst, daß das Traggerüst aus einer parallel zur Längsachse des Rohres verfahrbaren Führungssäule besteht, eine Vorrichtung zum Drehen des Rohres um seine Längsachse vorgesehen ist und der Brenner in der Schweißstellung so eingestellt ist, daß der in der Innenwandung des Rohres befindliche Schneidpunkt des Brenners auf der Verlängerung der Schwenkachse des Brennerarmes liegt.

Auch bei der Schneidvorrichtung nach der DE-PS-27 15 465 wird weder der zu schneidende Gegenstand, also beispielsweise ein Rohr, gedreht, noch wird gelehrt, den Schlitten so wie bei dieser Erfindung gesteuert zu verfahren.

Die Erfindung hat den Vorteil, daß sich der Schneidpunkt stets an der Innenwandung des Rohres lotrecht unterhalb der Schwenkachse befindet, so daß beliebige Schneidwinkel erreicht werden können. Das ist insbesondere für eine exzentrische Verbindung zweier Rohre vorteilhaft. Im Gegensatz zu dem bekannten Verfahren zum Schneiden eines Rohres, bei dem die Schwenkachse des Brennerarmes und das Rohr während des Schneidvorganges sich nicht gegeneinander bewegen, deshalb auch von einer Vorrichtung gesprochen wurde, die ähnlich einem Zirkel arbeitet, wird bei dem erfindungsgemäßen Verfahren das Rohr während des Schneidvorganges gedreht. Dadurch werden insgesamt die Verstell- und Verschiebewege kürzer, so daß auch entsprechend eine höhere Genauigkeit erreicht werden kann.

Bei dieser Ausführung sind die Gelenke stets durch eine einzige Achse definiert, so daß sie sehr präzise und spielfrei eingestellt werden können. Die Aufgabe der Parallelogrammführung wird durch die kombinierte Verstellung der Längsführung und des Kippwinkels erreicht. Da nur jeweils eine Achse für die Schwenk- bzw. Kippbewegung vorhanden ist, werden auch ein Klemmen bzw. eine Schwergängigkeit in bestimmten Winkelpositionen unterdrückt, die Antriebskraft für die Winkeleinstellung des Brenners ist somit unabhängig vom Ausgangswinkel. Insgesamt wird durch die so beschriebene Vorrichtung eine wesentlich verbesserte Präzision der Linienführung der Spitze des Brenners erreicht, mithin also die Schnittgeometrie deutlich verbessert.

Sehr vorteilhaft ist es, wenn die Schwenkachse vertikal verläuft. Dann befinden sich die Verschieberichtung der Längsführung und die Kippachse auf horizontalen Ebenen. Dadurch wird ein toter Winkel beim Durchgang des Brenners durch die Vertikale vermieden. Der Brennerarm hängt dabei vorteilhafterweise vom Traggerüst lotrecht nach unten, so daß sein Gewicht von den Lagern der Schwenkachse, nicht aber vom Drehantrieb dieser Schwenkachse aufgefangen wird. Ein toter Winkel bei einer Schwenkbewegung um die Schwenkachse wird somit praktisch ausgeschlossen.

Sehr vorteilhaft ist es, wenn sich die Kippachse des Brennerarms in Nähe des freien Endes dieses Brennerarms und möglichst nahe an diesem freien Ende befindet. Dadurch lassen sich auch bei Rohren mit größeren Durchmessern noch Schnitte ausführen, die lediglich eine kleine Winkeldifferenz zur Tangentialen aufweisen.

Zudem wird vorgeschlagen, die Längsführung mit einem zweiten, ein Gegengewicht zum ersten Schlitten bildenden Schlitten auszurüsten. Dadurch bleibt der Massenmittelpunkt der Längsführung mit Schlitten und Brenner stets auf der Achse der Schwenkachse, so daß an dieser keine, ein totes Spiel ermöglichende Drehmomente auftreten können. Schließlich wird vorgeschlagen, den Massenmittelpunkt der Kippeinrichtung, die sich am Schlitten der Längsführung befindet und den Brenner umfaßt, auf die Kippachse zu legen. Dadurch treten auch dann, wenn der Brenner bewegt wird, keine resultierenden Gewichtskräfte an der Längsführung oder der Schwenkachse auf.

In sehr vorteilhafter Weiterbildung der Erfindung wird vorgeschlagen, daß die Längsführung ein Führungsteil mit bogenförmiger, insbesondere kreisbogenförmiger Führung für den Schlitten aufweist.

Aufgrund der Bogenführung des Brenners in seinem Schlitten wird ein Stelleintrieb für die Kippwinkeleinstellung der Brennerachse eingespart. Durch Verfahren des Schlittens entlang des ihm zugeordneten Führungsteiles wird zugleich der Kippwinkel des Brenners eingestellt, ein Antrieb um die Kippachse entfällt somit. Zugleich liegt die Kippachse wieder vor der Spitze des Brenners (beim praktischen Betrieb) und kann damit so eingestellt werden, daß sie auf der Innenwand des zu bearbeitenden Rohrs liegt. Dabei ist es sehr vorteilhaft, wenn die bogenförmige Längsführung kreisförmigen Verlauf hat.

Als besonderer Vorteil ist anzusehen, daß der Brenner gegenüber dem Schlitten nur noch entlang der Brennerachse bewegbar ist, hierduch wirken sich Ungenauigkeiten in der Schlittenführung weniger auf die Einstellung des Brenners aus. Schließlich sind insgesamt die zur Verstellung des Brenners bei irgendeinem Schneidvorgang notwendigen Verstellwege kürzer.

Vorteilhafterweise ist das Führungsteil der Längsführung klappsymmetrisch zur Schwenkachse angeordnet. Dies ermöglicht eine Pendelung zu beiden Seiten der Schwenkachse ohne Drehen dieser Schwenkachse. Grundsätzlich genügt es jedoch, wenn die Längsführung nur aus einem halben Teilstück und insbesondere Bogen besteht, so daß ausgehend von einer Parallelstellung von Brenner und Schwenkachse lediglich eine Bewegung bzw. Schwenkung in eine Richtung vorgenommen werden kann. Die hierzu klappsymmetrische Richtung wird durch Verschwenken der Schwenkachse um 180° erreicht.

Vorzugsweise schneidet die Achse des Brenners stets die Verlängerung der Schwenkachse, so daß unabhängig von einer Drehung der Schwenkachse und einem Verfahren des Schlittens entlang des Führungsteils stets die Brennerachse auf denselben Punkt, insbesondere an der Innenwandung des zu bearbeitenden Rohres, zeigt. Dadurch wird das Programm für die Ansteuerung des Brennerarms vereinfacht.

Die Brennerachse verläuft vorteilhafterweise stets rechtwinklig zur Tangente im Anlagepunkt des Schlittens am Führungsteil. Bei kreisbogenförmigem Verlauf des Führungsteils ergeben sich dann geometrisch einfache Verhältnisse.

Damit der erfindungsgemäße Brennerarm bei einer Schwenkbewegung um die Schwenkachse nicht an dem zu bearbeitenden Rohr anstößt, muß sichergestellt sein, daß sich die Unterkanten des Führungsteils stets oberhalb eines Niveaus befinden, das durch die höchste Stelle an der Außenwand des Rohres definiert ist. Zweckmäßigerweise befindet sich auch die Kippachse stets unterhalb des Führungsteils.

Dadurch sind der Winkeleinstellung des Brenners gegenüber der Schwenkachse jedoch dann Grenzen gesetzt, wenn das Führungsteil fest mit der Schwenkachse verbunden ist. Unter dieser Voraussetzung lassen sich Neigungswinkel des Brenners gegenüber der Schwenkachse um 90° praktisch nicht realisieren. Derartige Neigungswinkel können jedoch dann erreicht werden, wenn man in vorzugsweiser Ausbildung der Erfindung eine Verstellung zwischen Längsachse und Führungsteil entlang derselben Führungsbahn, auf der auch der Schlitten für den Brenner geführt wird, zuläßt.

Weitere Vorteile der Erfindung ergeben sich aus den übrigen Ansprüchen und der nun folgenden Beschreibung zweier bevorzugter, jedoch nicht einschränkend zu verstehender Ausführungsbeispiele, die unter Bezugnahme auf die Zeichnung beschrieben werden. In dieser zeigen:

Figur 1 eine perspektivische Darstellung eines Teils einer Rohrbrennschneidmaschine mit Traggerüst, Brennerarm sowie mit einem zu bearbeitenden Rohr,

Figur 2 und 3 Schnittbilder eines Rohres mit schematischer Darstellung von Längsführung, Kippeinrichtung und Brenner,

Figur 4 eine Seitenansicht eines Brennerarms und Teil eines Schnittbildes durch ein zu bearbeitendes Rohr, die Kippachse verläuft waagerecht und in der Zeichnungsebene, und

Figur 5 eine Stirnansicht des Brennerarms gemäß Fig. 4 sowie eine Ansicht eines Teilschnittbildes durch ein zu bearbeitendes Rohr, die Kippachse verläuft rechtwinklig zur Zeichenebene.

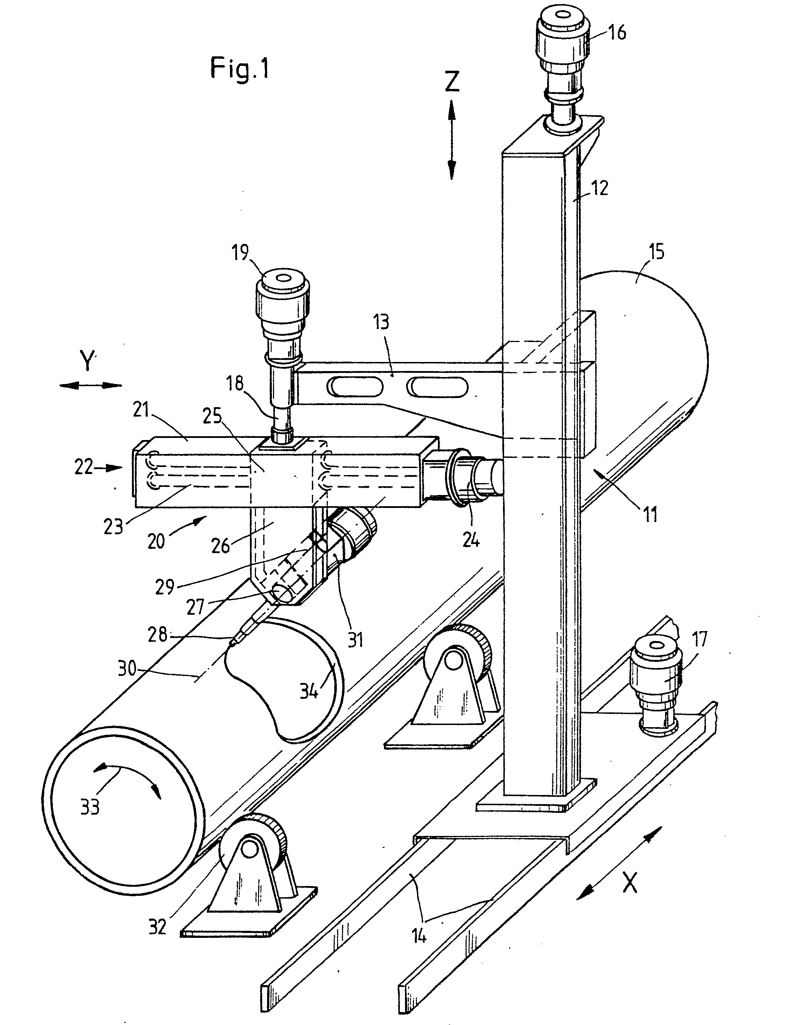

In Fig. 1 ist der mechanische Bewegungsapparat einer Rohrbrennschneidmaschine gezeigt, zur vollständigen Maschine fehlen noch unter anderem Steuereinheit, Gaszufuhr usw. Ein Traggerüst 11, das sich im wesentlichen aus einer vertikalen Führungssäule 12 und einem vertikal von dieser auskragenden Tragarm 13 zusammensetzt, ist auf zwei Schienen 14, die in X-Richtung verlaufen, verschiebbar. Die X-Richtung läuft parallel zur Achsenrichtung eines zu bearbeitenden Rohres 15. Der Tragarm 13 ist an der Führungssäule 12 geführt und mittels eines, am Kopfende der Führungssäule 12 angeordneten Elektromotors 16 heb- und senkbar. Der Antrieb des Traggerüsts 11 gegenüber den Schienen 14 erfolgt mittels eines Elektromotors 17.

Der Tragarm 13 ragt in Y-Richtung vor, diese liegt, wie die vertikale Z-Richtung, auf einer Radialebene des Rohres 15. Am freien Ende des Tragarms 13 ist eine Schwenkachse 18 drehbar gelagert und mittels eines Elektromotors 19 drehbar. Sie verläuft vertikal, also in Z-Richtung und ist Bestandteil eines Brennerarms 20, der im folgenden näher beschrieben wird :

Die Schwenkachse 18 des Brennerarms ist mit dem festen Teil hier dem Führungsteil 21, einer Längsführung 22 starr verbunden. Durch Drehen der Schwenkachse 18 mittels der Elektromotors 19 beschreibt der Führungsteil 21 eine waagerechte Drehbewegung, er steht im rechten Winkel zur Schwenkachse 18. Der Führungsteil 21 hat zwei parallele und vorzugsweise übereinander angeordnete Führungsstangen 23, von denen zumindest eine als Schraube ausgebildet ist. Mit dieser ist ein Elektromotor 24 verbunden, der der Hin- und Herbewegung eines Schlittens 25 der Längsführung 22 dient. Dieser wiederum hat zwei nach unten vorspringende Flansche 26, deren untere, freie Enden durch eine Kippachse 27 verbunden werden. Um diese ist ein Brenner 28 mit zugehörigem Stellantrieb 29 für die Bewegung des Brenners 28 auf seiner Achse 30 schwenkbar. Diese Schwenkbewegung erfolgt motorisch über einen Elektromotor 31, der sich oberhalb der Kippachse 27 an einem der beiden Flansche 26 befindet.

Das zu bearbeitende Rohr ist in den angetriebenen Rollen 32 gelagert und kann entsprechend den Pfeilrichtungen 33 um seine, parallel zur X-Richtung laufende Längsachse gedreht werden. Zusammen mit der Längsverschiebung des Traggerüsts 11 mittels des Elektromotors 17 können alle auf einer Wand des Rohres 15 liegende Punkte erreicht werden. Andererseits ist es jedoch auch möglich, auf diesen Drehantrieb des Rohrs 15 mittels der Rollen 32 zu verzichten und das Rohr 15 beim Schneiden nicht zu bewegen. In diesem Fall muß die radiale Bewegung des Rohres ersetzt werden durch eine kombinierte Bewegung der Höhenverstellung des Tragarms 13 mittels des Elektromotors 16 und der Verschiebung des Schlittens 25 auf der Längsführung 22.

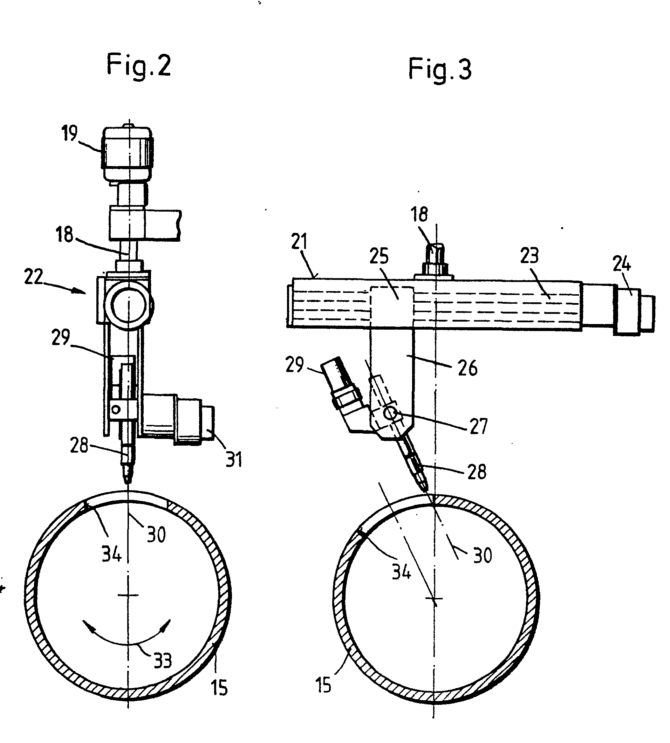

In den Fig. 2 und 3 ist die Position des Schlittens 23 und die Winkelstellung des Brenners 28 in den Winkellagen 0° bzw. 180° (für Fig. 2) und 90° bzw. 270° (für Fig. 3) gezeigt.

Diese Winkel sind dabei ausgehend von der X-Achse, also der Rohrlängsachse, bestimmt. In den gezeigten Beispielen aller drei Figuren geht es darum, eine zentrische Anpassung für ein mit 90° einmündendes Nebenrohr (das nicht dargestellt ist) zu schneiden. Die notwendige und in Fig. 1 dargestellte, etwa ellipsenförmige Schneidlinie 34 wird bei der gezeigten Vorrichtung entweder der Schablone oder über einen Rechner zugeführt, der die einzelnen Elektromotoren 16, 17, 24 und 31 sowie den Stellantrieb 29 entsprechend ansteuert.

In den Fig. 2 und 3 ist die Brennergeometrie für ein drehbewegtes Rohr 15, wie es in Fig. 1 mittels des Pfeiles 33 angedeutet ist, gezeigt. Aufgrund der kombinierten Bewegungen des Rohres 15 mittels der Rollen 32 und des Elektromotors 17 für die Verschiebung in X-Richtung des Traggerüsts 11 liegt die Schneidlinie 34 stets lotrecht unterhalb der Schwenkachse 18.

Der Schnitt entlang der Schneidlinie 34 soll bei einem Winkel von 0° und in der in Fig. 2 gezeigten Position beginnen. Der Brenner 28 steht senkrecht, seine Achse 30 fluchtet mit der Schwenkachse 18. Während des Schnittes der ersten 90° der Schneidlinie 34, also beim Übergang zu Fig. 1 wird das Rohr 15 zunehmend gedreht, bis es die in Fig. 3 gezeigte Position erreicht hat. Da der Brenner 28 beim hier betrachteten, zunächst ohne eine Schweißfase ablaufenden Ausführungsbeispiel stets parallel zur Achse des einzusetze den Nebenrohres stehen muß, muß er ausgehend von seiner Vertikalposition im Bild 2 mit fortlaufendem Schnitt um den selben Winkel wie das Rohr geschwenkt werden. Damit nun der Schneidpunkt des Brenners 28 auf der Verlängerung der Schwenkachse 18 bleibt, muß der Schlitten, wie in Fig. 2 gezeigt, soweit nach links (bzw. beim Winkel von 270° nach rechts) verfahren werden, wie es dem Tangens des Schwenkwinkels des Rohres 15 multipliziert mit dem Abstand von Kippachse 27 und Schneidpunkt (an der Innenwandung des Rohrs 15 und lotrecht unterhalb der Schwenkachse 18) entspricht. Durch kombiniertes Verstellen des Schlittens 25 in seiner Längsführung 22, Schwenken des Brenners um die Kippachse 27 um den selben Winkel, um den das Rohr 15 gedreht wurde und Ausfahren des Brenners 28 mittels seines Stellantriebs 29 entlang seiner Achse 30 wird die in Fig. 3 gezeigte Stellung des Brenners erreicht, die der Schnittstellung bei 90° entspricht. Bei 270° ist die Darstellung seitenverkehrt, ansonsten aber zutreffend.

Hinsichtlich der Brennergeometrie liegen die Verhältnisse dann einfacher, wenn am ruhenden Rohr 15 geschnitten wird. Hier genügt es, wenn ohne Schweißfase geschnitten wird, den Brenner 28 parallel und auf der gewünschten Schneidlinie 34 zu versetzen. Wie schon oben erläutert, erfolgt die Radialbewegung nun über die Längsführung 22 und die Höhenverstellung des Tragarms 13.

Die besonderen Vorteile der erfindungsgemäßen Vorrichtung zeigen sich dann, wenn komplizierte Schneidgeometrien (exzentrische Anpassung, exzentrische Durchdringung usw.) geschnitten werden sollen, insbesondere aber auch beim Schneiden einer Schneidlinie 34 wie oben erläutert, jedoch zusätzlich mit einer Schweißfase.

Für die Ausbildung einer im Querschnitt dreieckförmigen Schweißfase muß im Gegensatz zu den Zeichnungen in Fig. 2 und 3 noch etwas mehr Material des Rohres 15 weggeschnitten werden. Dabei bleibt jedoch die Schnittlinie 34 an der Innenwandung des Rohres 15 erhalten. Die Schnittlinie mit Schweißfase läuft in einem kleineren Winkel als die in Fig. 2 und 3 gezeigte Schnittlinie 34 auf die (Tangente an die) Innenwand. Bei der Ausbildung der Schweißfase muß jedoch der Winkel gegenüber der in Fig. 2 und 3 gezeigten, zylindrischen Schneidlinie 34 mit dem Schneidwinkel geändert werden, weil bei konstantem Winkel die Öffnung der Schweißfase in den 90° bzw. 270° Punkten größer wäre als in den 0° bzw. 180° Punkten.

Hier ist nun die anmeldungsgemäße Konstruktion eines Brennerarms 20 von Vorteil. Bei der in den Figuren gezeigten Ausbildung einer Schneidlinie 34 bei mitgedrehtem Rohr 15 genügt es als erster Ansatz für eine im wesentlichen ringsum konstante Breite der Schweißfase, wenn der Schlitten 25 um einen gewissen Betrag, der unabhängig ist von der betrachteten Position entlang der Schneidlinie 34, seitlich verschoben wird. In Fig. 3 wird dies beispielsweise dadurch erreicht, daß der Schlitten 25 mehrere Millimeter nach rechts verschoben wird und der Brenner 28 entsprechend steiler angestellt wird.

Der Abstand der Kippachse 27 von der Oberseite des Rohrs 15 sollte möglichst klein sein, da die Tangensverschiebung entlang der Längsführung 22 und für den Schlitten 25 dann klein bleibt und somit die Länge dieser Längsführung 22 gering bleibt. Schließlich soll ausdrücklich darauf hingewiesen werden, daß der erfindungsgemäße Brennerarm auch für Schweißmaschinen, die die auf einer Rohrbrennschneidmaschine vorbereiteten Rohre automatisch zusammenschweißen, sehr geeignet ist. Schließlich kann neben den gezeichneten Einschnitt in ein Rohr 15 auch das zugehörige Nebenrohr, das in die geschnittene Öffnung exakt hineinpasst, zugeschnitten werden.

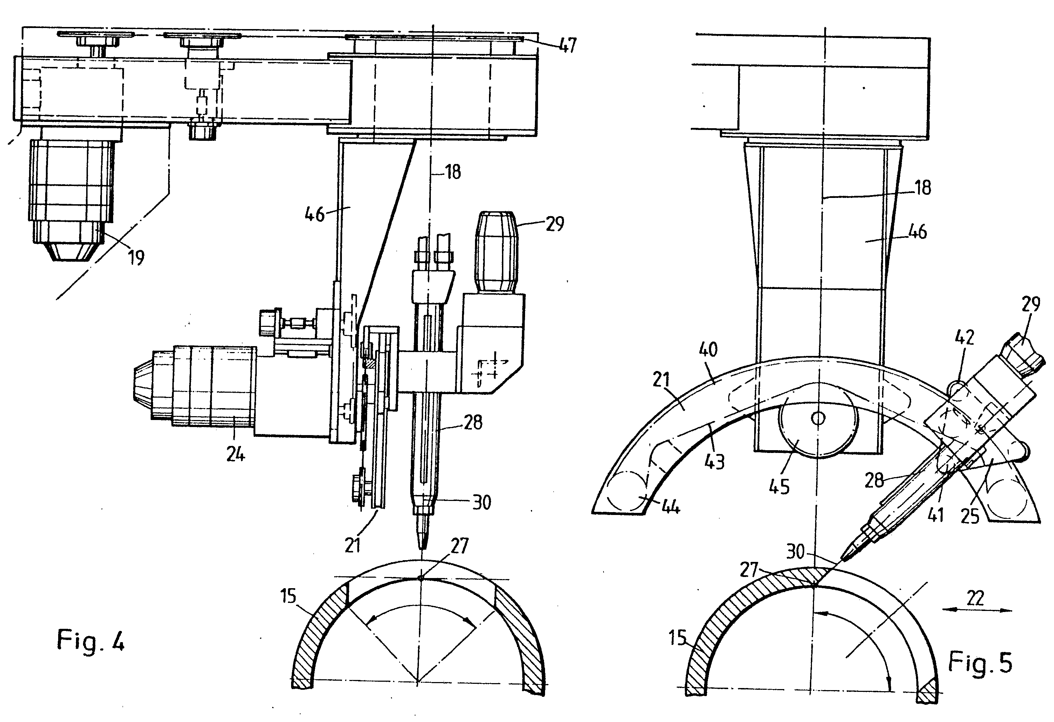

Beim Brennerarm nach dem zweiten Ausführungsbeispiel, das in den Fig. 4 und 5 dargestellt ist, ist die Längsführung 22 nicht mit einem geradlinigen Führungsteil 21, sondern einem kreisbogenförmig gekrümmten Führungsteil 21 ausgestattet. Entlang des so geschaffenen, sich über mehr als 90°, also ∓ 45° zur Schwenkachse 18 erstreckenden Bogens ist der Schlitten 25 verfahrbar. Er trägt den Brenner 28, der jedoch nur entlang seiner Brennerachse 30 gegenüber dem Schlitten 25 verstellt werden kann.

Wie die Fig. 4 und 5 zeigen, wird das Führungsteil 21 der Längsführung 22 durch zwei deckungsgleiche Kreisringstücke 40 gebildet, auf deren Innenrand ein Rad 41 und auf deren Außenrand zwei Räder 42 des Schlittens 25 abrollen. Diese Räder 41 und 42 sind auf den Eckpunkten eines im wesentlichen gleichschenkligen Dreiecks angeordnet. Der Antrieb des Schlittens erfolgt über eine Steuerkette 43 oder eine Seilzugführung mit entsprechenden Umlenkrollen 44. Der Antrieb über den Elektromotor 24 wird über ein Zahnrad 45 aufgebracht.

Der Elektromotor 24 für die Verschiebung des Schlittens 25 entlang des Führungsteils 21 ist an einer Konsole 46 befestigt, die um die Schwenkachse 18 gedreht werden kann. Für diese Drehbewegung ist der Elektromotor 19 vorgesehen, der über einen Antrieb bekannter Art eine Scheibe 47, die mit der Konsole 46 verbunden ist, antreibt. Die Konsole 46 ist dabei so exzentrisch angeordnet, daß sich die Achse 30 des Brenners 28 in der in Fig. 4 gezeigten, senkrechten Brennerposition auf der (verlängerten) Schwenkachse 18 befindet. Hierdurch werden geometrisch einfache Verhältnisse geschaffen.

**Patentansprüche**

1. Verfahren zum Brennschneiden eines Rohres (15) mit einem automatisch gesteuerten Brenner (28), der parallel und senkrecht zur Längsachse des Rohres (15) verfahren, um eine senkrechte zur Längsachse des Rohres (15) verlaufende Achse (18) geschwenkt und um eine parallel zur Längsachse des Rohres (15) verlaufende Achse (27) gekippt wird, dadurch gekennzeichnet, daß das Rohr (15) beim Schneidvorgang um seine Längsachse gedreht wird und die Bewegungsmöglichkeiten des Brenners (28) so gesteuert werden, daß der in der Innenwandung des Rohres (15) befindliche Schneidpunkt des Brenners (28) auf der Verlängerung der Schwenkachse (18) des Brennerarmes (20) liegt.

2. Vorrichtung zum Brennschneiden eines Rohres (15) mit einem automatisch gesteuerten Brenner (28), wobei die Vorrichtung ein Traggerüst (11) und einen Brennerarm aufweist und das Traggerüst (11) mit einem höhenverstellbaren Tragarm (13) versehen ist, an welchem der Brennerarm (20) befestigt ist, und zwar derart, daß der Brennerarm (20) um eine senkrecht zur Rohrlängsachse parallele Achse (18) verschwenkbar ist, wobei der Brennerarm (20) eine Längsführung (22) aufweist, an der ein Schlitten (25) verfahrbar ist, welcher eine parallel zur Längsachse des Rohres (15) verlaufende Kippachse (27) für den Brenner (28) aufweist, dadurch gekennzeichnet, daß das Traggerüst (11) aus einer parallel zur Längsachse des Rohres (15) verfahrbaren Führungssäule (12) besteht, eine Vorrichtung (32) zum Drehen des Rohres (15) um seine Längsachse vorgesehen ist und der Brenner (28) in der Schweißstellung so eingestellt ist, daß der in der Innenwandung des Rohres (15) befindliche Schneidpunkt des Brenners (28) auf der Verlängerung der Schwenkachse (18) des Brennerarmes (20) liegt.

3. Vorrichtung nach Anspruch 2, dadurch gekennzeichnet, daß bei horizontaler Lage des zu bearbeitenden Rohres (15) die Schwenkachse (18) vertikal, die Verschieberichtung der Längsführung (22) horizontal und die rechtwinklig zu dieser Verschieberichtung verlaufende Kippachse (27) ebenfalls horizontal verläuft.

4. Vorrichtung nach Anspruch 2 oder 3, dadurch gekennzeichnet, daß die Kippachse (27) sich in Nähe des freien Endes des Brennerarms (20) und möglichst nahe an diesem freien Ende befindet.

5. Vorrichtung nach einem der Ansprüche 2 bis 4, dadurch gekennzeichnet, daß die Längsführung (22) einen zweiten, ein Gegengewicht bildenden Schlitten aufweist, dessen Gewicht dem Gewicht des ersten, den Brenner tragenden Schlittens (25) entspricht und der so gegenläufig zum ersten Schlitten (25) verfahrbar ist, daß der Massenmittelpunkt des Brennerarmes (20) stets auf der Achse der Schwenkachse (18) liegt.

6. Vorrichtung nach einem der Ansprüche 2 bis 5, dadurch gekennzeichnet, daß der Massenmittelpunkt der Kippeinrichtung mit Brenner (28) und Stellantrieb (29) auf der Kippachse (27) liegt (Fig. 1 bis 3).

7. Vorrichtung nach einem der Ansprüche 2 bis 6, dadurch gekennzeichnet, daß der Kippwinkel des Brenners (28) ausgehend von der vertikalen (Z-Achse) maximal $\mp 90°$ beträgt.

8. Vorrichtung nach einem der Ansprüche 2 bis 7, dadurch gekennzeichnet, daß die Längsführung (22) ein Führungsteil (21) mit bogenförmiger, insbesondere kreisbogenförmiger Führung für den Schlitten (25) aufweist.

9. Vorrichtung nach einem der Ansprüche 2 bis 8, dadurch gekennzeichnet, daß das Führungsteil (21) klappsymmetrisch zur Schwenkachse (18) ausgebildet ist.

10. Vorrichtung nach einem der Ansprüche 2 bis 9, dadurch gekennzeichnet, daß die Schwenkachse (18) und die Achse (30) des Schneidbrenners (28) unabhängig von der Position des Schlittens (25) in der Längsführung (22) stets in derselben Ebene liegen.

11. Vorrichtung nach einem der Ansprüche 2 bis 10, dadurch gekennzeichnet, daß das Führungsteil (21) eine kreisbogenförmige Führung für den Schlitten (25) aufweist und daß die Achse (30) des Brenners (28) stets rechtwinklig zu dieser Führung steht.

12. Vorrichtung nach einem der Ansprüche 2 bis 11, dadurch gekennzeichnet, daß die Kippachse (27) unterhalb der Längsführung (22) liegt.

13. Vorrichtung nach einem der Ansprüche 2 bis 12, dadurch gekennzeichnet, daß das Führungsteil (21) fest mit der Schwenkachse (18) verbunden ist und daß der Brenner (28) ausgehend von seiner Parallelstellung zur Schwenkachse (18) um mindestens $\mp 60°$ verschwenkt werden kann.

14. Vorrichtung nach einem der Ansprüche 2 bis 13, dadurch gekennzeichnet, daß das Führungsteil (21) kreisbogenförmig ist und gegenüber der Schwenkachse (18) und zentrisch zur Kippachse (27) gegenüber dieser verschiebbar ist.

**Claims**

1. Method of flame-cutting a tube (15) with an automatically controlled flame cutting torch (28) which is driven parallel and at right angles relative to the longitudinal axis of the tube (15), pivoted about an axis (18) which is at right angles relative to the longitudinal axis of the tube (15) and tilted about an axis (27) extending parallel to the longitudinal axis of the tube (15), characterised in that the tube (15) is rotated about its longitudinal axis during the cutting operation and the displacement option of the cutting torch (28) are so controlled that the cutting point of the torch (28) which is on the interior wall of the tube (15) will be situated on a prolongation of the pivot axis (18) of the torch-arm (20).

2. Apparatus for flame-cutting a tube (15) with an automatically controlled flame cutting torch (28) in which the apparatus comprises a supporting frame (11) and a torch arm and the supporting frame (11) is provided with a supporting arm (13) of adjustable height to which the torch arm (20) is secured in such a manner that the torch arm (20) can be pivoted about a vertical axis (18) parallel with the longitudinal tube axis, the torch arm (20) having a longitudinal guide means (22) along which a slide (25) is displaceable which has a tilting axis (27) for the torch (28) extending parallel to the longitudinal axis of the tube (15), characterised in that the supporting frame (11) consists of a guide pillar (12) which is adapted to be driven parallel to the longitudinal axis of the tube (15), that means (32) are provided for rotating the tube (15) about its longitudinal axis and in that the flame cutting torch (28) in its operative welding position is set in such a way that the cutting point of the torch (28) which is situated in the interior wall of the tube (15) lies on the prolongation of the pivot axis (18) for the torch arm (20).

3. Apparatus according to Claim 2, characterised in that, with the tube (15) which is to be treated in a horizontal position, the pivot axis (18) is vertical, the direction of displacement of the longitudinal guide means (22) is horizontal and the tilting axis (27) which is at right angles to said direction of displacement is likewise horizontal.

4. Apparatus according to Claim 2 or 3, characterised in that the tilting axis (27) is in the vicinity of the free extremity of the torch arm (20) and as close as possible to said free extremity.

5. Apparatus according to any of Claims 2 to 4, characterised in that the longitudinal guide means (22) comprise a second slide representing a counterweight, the weight of which corresponds to the weight of the first slide (25) which carries the torch and which is adapted to be driven oppositely relative to the first slide (25) in such a manner that the centre of gravity of the torch arm (20) is always situated on the axis of the pivot axis (18).

6. Apparatus according to any of Claims 2 to 5, characterised in that the centre of gravity of the tilting device with torch (28) and servo-drive (29) is situated on the tilting axis (27) (Figure 1 to 3).

7. Apparatus according to any of Claims 2 to 6, characterised in that the maximum tilting angle of the torch (28) starting from the vertical (Z-axis) amounts to + 90°.

8. Apparatus according to any of Claims 2 to 7, characterised in that the longitudinal guide means (22) comprise a guide element (21) having an arcuate, in particular part-circular, guideway for the slide (25).

9. Apparatus according to any of Claims 2 to 8, characterised in that the guide element (21) is oppositely symmetrical relative to the pivot axis (18).

10. Apparatus according to any of Claims 2 to 9, characterised in that the pivot axis (18) and the axis (30) of the torch (28), irrespective of the position of the slide (25) in the longitudinal guide means (22), are always in one and the same plane.

11. Apparatus according to any one of Claims 2 to 10, characterised in that the guide element (21) comprises a circularly arcuate guideway for the slide (25) and in that the axis (30) of the torch (28) is always at right angles to said guideway.

12. Apparatus according to any of Claims 2 to 11, characterised in that the tilting axis (27) is below the longitudinal guide means (22).

13. Apparatus according to any of Claims 2 to 12, characterised in that the guide element (21) is fixedly connected with the pivot axis (18) and in that the torch (28), starting from its position in parallel with the pivot axis (18) can be pivoted through at least + 60°.

14. Apparatus according to any of Claims 2 to 13, characterised in that the guide element is circularly arcuate and displaceable relative to the pivot axis (18) and concentrically relative to the tilting axis (27).

**Revendications**

1. Procédé pour réaliser l'oxycoupage d'un tube (15) à l'aide d'un chalumeau (28) commandé de façon automatique, qui se déplace parallèlement et perpendiculairement à l'axe longitudinal du tube (15), pivote autour d'un axe (18) qui est perpendiculaire à l'axe longitudinal du tube (15) et bascule autour d'un axe (27) parallèle à l'axe longitudinal du tube (15), caractérisé en ce que lors de l'opération de découpage, on fait pivoter le tube (15) autour de son axe longitudinal et on commande les possibilités de déplacement du chalumeau (28) de manière que le point de coupe, situé sur la paroi intérieure du tube (15), du chalumeau (28) soit situé sur le prolongement de l'axe de pivotement (18) du bras (20) du chalumeau.

2. Dispositif pour réaliser l'oxycoupage d'un tube (15) à l'aide d'un chalumeau (28) commandé de façon automatique, et dans lequel le dispositif comporte un châssis de support (11) et un bras pour le chalumeau, et le châssis de support (11) est muni d'un bras de support (13) réglable en hauteur, sur lequel le bras (20) du chalumeau est fixé, et ce de telle sorte que le bras (20) du chalumeau peut pivoter autour d'un axe (18) perpendiculaire à l'axe longitudinal du tube, le bras (20) du chalumeau possédant un dispositif de guidage longitudinal (22), sur lequel peut se déplacer un chariot (25) qui possède, pour le chalumeau (28), un axe de basculement (27) disposé parallèlement à l'axe longitudinal du tube (15), caractérisé en ce que le châssis de support (11) est constitué par une colonne de guidage (12) déplaçable parallèlement à l'axe longitudinal du tube (15) et comporte un dispositif (33) servant à entraîner le tube (15) en rotation autour de son axe longitudinal, et que le chalumeau (28) est réglé dans la position de soudage de telle sorte que le point de coupe, situé sur la paroi intérieure du tube (15) du chalumeau (28) se trouve sur le prolongement de l'axe de pivotement (18) du bras (20) du chalumeau.

3. Dispositif selon la revendication 2, caractérisé en ce que, lorsque le tube (15) devant être travaillé est dans la position horizontale, l'axe de pivotement (18) est vertical, la direction de déplacement du dispositif de guidage longitudinal (32) est horizontale et que l'axe de basculement (27), qui est perpendiculaire à cette direction de déplacement, est également horizontal.

4. Dispositif selon la revendication 2 ou 3, caractérisé en ce que l'axe de basculement (27) est situé à proximité de l'extrémité libre du bras (20) du chalumeau, et est aussi rapproché que possible de cette extrémité libre.

5. Dispositif selon l'une des revendications 2 à 4, caractérisé en ce que le dispositif de guidage longitudinal (22) comporte un second chariot formant un contrepoids et dont le poids correspond au poids du premier chariot (25) portant le chalumeau et qui est déplaçable en sens opposé du premier chariot (25) de telle sorte que le centre de masse du bras (20) du chalumeau est toujours situé sur l'axe de pivotement (18).

6. Dispositif selon l'une des revendications 2 à 5, caractérisé en ce que le centre de masse du dispositif de basculement muni du chalumeau (28) et d'un servomoteur (29) est situé sur l'axe de basculement (27) (figures 1 à 3).

7. Dispositif selon l'une des revendications 2 à 6, caractérisé en ce que l'angle du basculement du chalumeau (28) à partir de la verticale (axe Z) est égal au maximum à ± 90°.

8. Dispositif selon l'une des revendications 2 à 7, caractérisé en ce que le dispositif de guidage longitudinal (22) comporte un organe de guidage (21) muni d'un guide courbe, notamment en forme d'arc de cercle, pour le chariot (25).

9. Dispositif selon l'une des revendications 2 à 8, caractérisé en ce que l'organe de guidage (21) présente une symétrie de révolution par rapport à l'axe de pivotement (18).

10. Dispositif selon l'une des revendications 2 à 9, caractérisé en ce que l'axe de pivotement (18) et l'axe (30) du chalumeau de découpage (28) sont toujours situés dans le même plan, indépendamment de la position du chariot (25) dans le dispositif de guidage longitudinal (22).

11. Dispositif selon l'une des revendications 2 à 10, caractérisé en ce que l'organe de guidage (21) comporte un guide en forme d'arc de cercle pour le chariot (25) et que l'axe (30) du chalumeau (28) est toujours perpendiculaire à ce guide.

12. Dispositif selon les revendications 2 à 11, caractérisé en ce que l'axe de basculement (27) est situé au-dessous du dispositif de guidage longitudinal (27).

13. Dispositif selon l'une des revendications 2 à 12, caractérisé en ce que l'organe de guidage (21) est relié rigidement à l'axe de basculement (18) et que le chalumeau (28) peut basculer d'au moins ± 60° à partir de sa position parallèle à l'axe de pivotement (18).

14. Dispositif selon l'une des revendications 2 à 13, caractérisé en ce que l'organe de guidage (21) est en forme d'arc de cercle et peut être déplacé par rapport à l'axe de pivotement (18) et par rapport à l'axe de basculement (27), en étant centré par rapport à ce dernier.

Fig.1

# Fig.2

# Fig.3

Fig. 5

Fig. 4